# EUROPEAN PATENT APPLICATION

(11) **EP 3 734 736 A1**
(43) Date of publication of application: **04.11.2020**
(21) Application number: 20170297.4
(22) Date of filing: 20.04.2020
(51) Int. Cl.: H01M 10/052

(54) **METHOD FOR GRANULATING LITHIUM BATTERY ELECTROLYTE**

(30) Priority: 29.04.2019 CN 201910354370
(71) Applicant: Shanghai Rolechem Co., Ltd., Shanghai 201207 (CN)
(72) Inventor: LIU, Jun, Shanghai, 201207 (CN); ZHANG, Dongquan, Shanghai, 201207 (CN)
(74) Representative: von Bülow & Tamada

(57) **Abstract**

The present disclosure relates to the technical field of preparing a lithium battery electrolyte; in particular, the present disclosure relates to a method for granulating a lithium battery electrolyte. The method for granulating a lithium battery electrolyte includes the following steps: step 1: putting an electrolyte into an extrusion granulator from a hopper to obtain particles by extrusion; step 2: using a filtering sieve for vibration sieving to sieve out electrolytes with a particle size larger than a sieve pore size; and step 3: transporting the sieved-out electrolytes into a stirring drum through a conveyor belt for stirring and mixing again, extrusion-granulating the particles, followed by packaging and storing in a warehouse. In the present disclosure, an electrolyte with uniform particle size is obtained by extrusion granulation, which has good roundness of granulated particles and high particle strength, and which can be conveniently packaged; material feeding is convenient during the preparation of the electrolytic solution, heat release during dissolution is reduced, dust is reduced, and the convenience is greatly improved.

## Description

### FIELD OF THE INVENTION

The present disclosure belongs to the technical field of preparing a lithium battery electrolyte; in particular, the present disclosure relates to a method for granulating a lithium battery electrolyte.

### BACKGROUND OF THE INVENTION

In recent years, with the promotion and application of lithium-ion batteries, the market has put forward higher and higher requirements on the comprehensive performance of lithium-ion batteries, as well as higher requirements on the raw material electrolyte salts of an electrolytic solution of lithium batteries, such as uniformity, dispersibility, surface area, viscosity, and bulk density of the raw materials.

At present, the traditional electrolyte salts are basically chemically crystallized, then dried and directly packaged. The materials are easy to agglomerate and have massive dust. For this reason, during the configuration of a downstream electrolytic solution, feeding difficulties are likely to occur; since the materials have a large viscosity, static electricity is easily generated; there are many raw materials remaining in the package, and the electrolyte is prone to accumulating on the bottom of electrolytic solution solvent, which leads to a long dissolution time.

In order to solve the problems in the traditional method, a method for granulating is designed in the present disclosure to obtain a lithium battery electrolyte which has good uniformity of particle roundness and high particle strength, and which can be conveniently packaged.

### SUMMARY OF THE INVENTION

In order to solve the above problems, a first aspect of the present disclosure provides a method for granulating a lithium battery electrolyte, which includes the following steps:
step 1: putting an electrolyte into an extrusion granulator from a hopper to obtain particles by extrusion;
step 2: using a filtering sieve for vibration sieving to sieve out electrolytes with a particle size larger than a sieve pore size; and
step 3: transporting the sieved-out electrolytes into a stirring drum through a conveyor belt for stirring and mixing again, extrusion-granulating the particles, followed by packaging and storing in a warehouse.

As a preferred technical solution, the electrolyte is in powdery form or crystalline form.

As a preferred technical solution, the electrolyte is an electrolyte salt, and is selected from an organic electrolyte salt and/or an inorganic electrolyte salt.

As a preferred technical solution, the electrolyte salt is selected from one or more of an electrolyte sodium salt, an electrolyte potassium salt, an electrolyte lithium salt, and an electrolyte calcium salt.

As a preferred technical solution, the electrolyte salt is selected from one or more of borate salt, phosphate salt, and imine salt.

As a preferred technical solution, the electrolyte salt is selected from one or more of tetrafluoroborate, difluorophosphate, difluorobis(oxalato) phosphate, tetrafluoro(oxalato) phosphate, difluoro(oxalato) borate, bis(oxalato) borate, bisfluorosulfonylimide salt, bistrifluoromethylsulfonylimide salt, and hexafluorophosphate.

As a preferred technical solution, the electrolyte is selected from one or more of lithium tetrafluoroborate, lithium difluorophosphate, lithium difluorobis(oxalato) phosphate, lithium tetrafluoro(oxalato) phosphate, lithium difluoro(oxalato) borate, lithium bis(oxalato) borate, lithium bisfluorosulfonylimide salt, lithium bistrifluoromethylsulfonylimide salt, and lithium hexafluorophosphate.

As a preferred technical solution, a granulation pore size of the extrusion granulator is 0.5-5 mm, and the pressure is 50-300 Bar.

A second aspect of the present disclosure provides a lithium battery electrolyte material, which is obtained according to the method for granulating as described above.

A third aspect of the present disclosure provides an application of a lithium battery electrolyte material in a lithium battery.

Advantageous effects: in the present disclosure, an electrolyte with uniform particle size is obtained by extrusion granulation, which has good roundness of granulated particles and high particle strength, and which can be conveniently packaged; material feeding is convenient during the preparation of the electrolytic solution, heat release during dissolution is reduced, dust is reduced, and the convenience is greatly improved.

### DETAILED DESCRIPTION OF THE EMBODIMENT(S) OF THE INVENTION

The technical features in the technical solution provided by the present disclosure will be further described clearly and completely in connection with specific embodiments below without limiting the scope of protection.

The words "preferred", "more preferred" and the like as used in the present disclosure refer to embodiments of the present disclosure that can provide certain advantageous effects under some circumstances. However, other embodiments may also be preferred under the same circumstances or under other circumstances. Furthermore, the recitation of one or more preferred embodiments does not imply that other embodiments cannot be adopted, nor does it intend to exclude other embodiments from the scope of the present disclosure.

When a range of numerical values is disclosed herein, the range is considered continuous and includes minimum and maximum values in the range, as well as each value between the minimum and maximum values. Further, when the range refers to integers, each integer between the minimum value and the maximum value in the range is included. In addition, when multiple ranges are provided to describe a feature or characteristic, the ranges can be combined. In other words, unless otherwise indicated, all ranges disclosed herein are understood to include any and all subranges subsumed therein. For example, a specified range "from 1 to 10" should be considered as including any and all subranges between the minimum value of 1 and the maximum value of 10. Exemplary subranges of the range from 1 to 10 include, but are not limited to, 1 to 6.1, 3.5 to 7.8, 5.5 to 10, and the like.

In order to solve the above problems, a first aspect of the present disclosure provides a method for granulating a lithium battery electrolyte, which includes the following steps:
step 1: putting an electrolyte into an extrusion granulator from a hopper to obtain particles by extrusion;
step 2: using a filtering sieve for vibration sieving to sieve out electrolytes with a particle size larger than a sieve pore size; and
step 3: transporting the sieved-out electrolytes into a stirring drum through a conveyor belt for stirring and mixing again, extrusion-granulating the particles, followed by packaging and storing in a warehouse.

In a preferred embodiment, a granulation pore size of the extrusion granulator is 0.5-5 mm, and the pressure is 50-300 Bar.

In a more preferred embodiment, the method for granulating a lithium battery electrolyte includes the following steps:
putting 1-4 kg of powdery electrolyte into an extrusion granulator from a hopper, the granulation pore size being 0.5-5 mm, and the pressure being 50-300 Bar; obtaining particles by extrusion; using a filtering sieve for vibration sieving; transporting electrolytes with a particle size larger than a sieve pore size into a stirring drum through a conveyor belt for stirring and mixing again, extrusion-granulating the particles, followed by packaging and storing in a warehouse.

During the research, the inventor found that when the above process is adopted, if parameters of the above process are adjusted to be within a reasonable range, the obtained material is not easy to adhere, and will not agglomerate after being placed for half a year. This is due to the following facts: when the pressure is small, a dense cake stick cannot be obtained by extrusion, and the obtained cake stick has very large pores, so the cake stick is easy to adhere due to water absorption after being placed for a long time; whereas when the pressure is too large, the cake stick obtained by extruding the material will easily crack so that the particle size is not uniform. Therefore, the above parameter setting of the present disclosure is necessary, with the purpose of obtaining an electrolyte material that is uniform in particle size, uniform in mesh size of the material, dense, not easy to adhere and suitable for later application.

### Electrolyte

The electrolyte in the present disclosure refers to a substance capable of conducting electricity in an aqueous solution or in a molten state. According to the strength of its conductivity in an aqueous solution, the electrolyte is divided into strong electrolyte and weak electrolyte. Inorganic compounds such as acids, bases, and salts are electrolytes, wherein strong acids, strong bases, and typical salts are strong electrolytes, and weak acids, weak bases, and some salts (such as mercury chloride) are weak electrolytes. Carboxylic acids, phenols, and amines in organic compounds are weak electrolytes.

In a preferred embodiment, the electrolyte is in powdery form or crystalline form.

In a preferred embodiment, the electrolyte is an electrolyte salt, and is selected from an organic electrolyte salt and/or an inorganic electrolyte salt.

In a preferred embodiment, the electrolyte salt is selected from one or more of an electrolyte sodium salt, an electrolyte potassium salt, an electrolyte lithium salt, and an electrolyte calcium salt.

In a preferred embodiment, the electrolyte salt is selected from one or more of borate salt, phosphate salt, and imine salt.

In a preferred embodiment, the borate salt may be any one of lithium borate, sodium borate, potassium borate, and calcium borate; the phosphate salt may be any one of lithium phosphate, sodium phosphate, potassium phosphate, and calcium phosphate; and the imine salt may be any one of lithium imine salt, sodium imine salt, potassium imine salt, and calcium imine salt.

During the research, on the basis of the above performance of the present disclosure, it is found through further research that under the same process parameters as above, especially when borate salt, phosphate salt, and imine salt electrolytes are used for granulation, the granularity distribution is more uniform, since the axial direction of the powder particles is more parallel to an extrusion direction during the extrusion process.

In addition, the inventor has unexpectedly found that when borate salt, phosphate salt, and imine salt electrolytes are used for granulation, the recovered powder material is also relatively less. It is speculated by the inventor that this may be due to the following facts: the powdery electrolyte material forms adhesion points at contact positions under an externally applied pressure during the granulation process; however, with the progress of granulation, the adhesion points will break when a relative movement occurs, resulting in a large amount of recovered powder material. As compared with other electrolyte powders, polar groups on the borate salt, phosphate salt, and imine powder can be better adsorbed on a metal surface, thereby reducing the resistance and friction of the powder during the extrusion process, and making it difficult to form adhesion points so that there will be less powder material recovered.

In a preferred embodiment, the electrolyte salt is selected from one or more of tetrafluoroborate, difluorophosphate, difluorobis(oxalato) phosphate, tetrafluoro(oxalato) phosphate, difluoro(oxalato) borate, bis(oxalato) borate, bisfluorosulfonylimide salt, bistrifluoromethylsulfonylimide salt, and hexafluorophosphate.

In a more preferred embodiment, the electrolyte is selected from one or more of lithium tetrafluoroborate, lithium difluorophosphate, lithium difluorobis(oxalato) phosphate, lithium tetrafluoro(oxalato) phosphate, lithium difluoro(oxalato) borate, lithium bis(oxalato) borate, lithium bisfluorosulfonylimide salt, lithium bistrifluoromethylsulfonylimide salt, and lithium hexafluorophosphate.

In addition, the inventor also found that in selecting the above-mentioned borate salts, phosphate salts and imine salts, when the lithium salt is further used, the hardness of the material is higher than when sodium and potassium salts are used. It is speculated by the inventor that this may be due to the following facts: the lithium atom has a small radius, and the volume of the powder shrinks during the extrusion process and the interfaces adhere to each other, which causes the internal pores to gradually become smaller; an adsorption film on the metal surface is not as strong as a deposited film, and will be renewed continuously during the extrusion process so that it automatically enters the small pores, which will discharge the gas in the pores, increase the density, and increase the hardness correspondingly; whereas the electrolyte sodium and potassium salts each have a larger radius, so there will be more pores than lithium salts and the density is not as high as lithium salts.

The purchase sources of the powdery electrolyte salts are not limited by the present disclosure. For example, the electrolyte salt such as lithium bisfluorosulfonylimide salt, lithium difluorophosphate, and lithium bis(oxalato) borate may be purchased from Hunan Jiahang Pharmaceutical Technology Co., Ltd.; and lithium hexafluorophosphate and lithium bistrifluoromethylsulfonylimide may be purchased from Morita New Energy Materials (Zhangjiagang) Co., Ltd.

A second aspect of the present disclosure provides a lithium battery electrolyte material, which is obtained according to the method for granulating as described above.

A third aspect of the present disclosure provides an application of a lithium battery electrolyte material in a lithium battery.

The present disclosure will be described in detail below with reference to embodiments. In addition, unless otherwise specified, all the raw materials as used are commercially available.

### Example

### Example 1

Example 1 provides a method for granulating a lithium battery electrolyte, which includes the following steps:
putting 2 kg of powdery lithium bisfluorosulfonylimide into an extrusion granulator from a hopper, the granulation pore size being 1 mm, and the pressure being 200 Bar; obtaining particles by extrusion; using a filtering sieve for vibration sieving; transporting electrolytes with a particle size larger than a sieve pore size into a stirring drum through a conveyor belt for stirring and mixing again, and extrusion-granulating the particles, whereby 1.9 kg of particles are obtained after sieving and 0.1 kg of powder is recovered.

### Example 2

Example 2 provides a method for granulating a lithium battery electrolyte, which includes the following steps:
putting 3 kg of powdery lithium difluorophosphate into an extrusion granulator from a hopper, the granulation pore size being 2 mm, and the pressure being 100 Bar; obtaining particles by extrusion; using a filtering sieve for vibration sieving; transporting electrolytes with a particle size larger than a sieve pore size into a stirring drum through a conveyor belt for stirring and mixing again, and extrusion-granulating the particles, whereby 2.85 kg of particles are obtained after sieving and 0.15 kg of powder is recovered.

### Example 3

Example 3 provides a method for granulating a lithium battery electrolyte, which includes the following steps:
putting 2 kg of powdery lithium bis(oxalato) borate into an extrusion granulator from a hopper, the granulation pore size being 0.5 mm, and the pressure being 120 Bar; obtaining particles by extrusion; using a filtering sieve for vibration sieving; transporting electrolytes with a particle size larger than a sieve pore size into a stirring drum through a conveyor belt for stirring and mixing again, and extrusion-granulating the particles, whereby 1.95 kg of particles are obtained after sieving and 0.05 kg of powder is recovered.

### Example 4

Example 4 provides a method for granulating a lithium battery electrolyte, which includes the following steps:
putting 2 kg of crystalline sodium bisfluorosulfonylimide into an extrusion granulator from a hopper, the granulation pore size being 1 mm, and the pressure being 150 Bar; obtaining particles by extrusion; using a filtering sieve for vibration sieving; transporting electrolytes with a particle size larger than a sieve pore size into a stirring drum through a conveyor belt for stirring and mixing again, and extrusion-granulating the particles, whereby 1.90 kg of particles are obtained after sieving and 0.10 kg of powder is recovered.

### Example 5

Example 5 provides a method for granulating a lithium battery electrolyte, which includes the following steps:
putting 2 kg of powdery lithium bistrifluoromethylsulfonylimide into an extrusion granulator from a hopper, the granulation pore size being 1 mm, and the pressure being 150 Bar; obtaining particles by extrusion; using a filtering sieve for vibration sieving; transporting electrolytes with a particle size larger than a sieve pore size into a stirring drum through a conveyor belt for stirring and mixing again, and extrusion-granulating the particles, whereby 1.92 kg of particles are obtained after sieving and 0.08 kg of powder is recovered.

### Example 6

Example 6 provides a method for granulating a lithium battery electrolyte, which includes the following steps:
putting 2 kg of crystalline lithium hexafluorophosphate into an extrusion granulator from a hopper, the granulation pore size being 1mm, and the pressure being 150 Bar; obtaining particles by extrusion; using a filtering sieve for vibration sieving; transporting electrolytes with a particle size larger than a sieve pore size into a stirring drum through a conveyor belt for stirring and mixing again, and extrusion-granulating the particles, whereby 1.95 kg of particles are obtained after sieving and 0.05 kg of powder is recovered.

### Comparative Example 1

Comparative Example 1 provides a method for granulating a lithium battery electrolyte, which includes the following steps:
putting 2 kg of powdery lithium bisfluorosulfonylimide into an extrusion granulator from a hopper, the granulation pore size being 0.2 mm, and the pressure being 400 Bar; obtaining particles by extrusion; using a filtering sieve for vibration sieving; transporting electrolytes with a particle size larger than a sieve pore size into a stirring drum through a conveyor belt for stirring and mixing again, and extrusion-granulating the particles, whereby 1.6 kg of particles are obtained after sieving and 0.4 kg of powder is recovered.

### Comparative Example 2

Comparative Example 2 provides a method for granulating a lithium battery electrolyte, which includes the following steps:
putting 2 kg of powdery lithium bisfluorosulfonylimide into an extrusion granulator from a hopper, the granulation pore size being 6 mm, and the pressure being 20 Bar; obtaining particles by extrusion; using a filtering sieve for vibration sieving; transporting electrolytes with a particle size larger than a sieve pore size into a stirring drum through a conveyor belt for stirring and mixing again, and extrusion-granulating the particles, whereby 1.45 kg of particles are obtained after sieving and 0.55 kg of powder is recovered.

### Comparative Example 3

Comparative Example 3 provides a method for granulating a lithium battery electrolyte, which includes the following steps:
putting 2 kg of powdery lead acetate into an extrusion granulator from a hopper, the granulation pore size being 1 mm, and the pressure being 200 Bar; obtaining particles by extrusion; using a filtering sieve for vibration sieving; transporting electrolytes with a particle size larger than a sieve pore size into a stirring drum through a conveyor belt for stirring and mixing again, and extrusion-granulating the particles, whereby 1.75 kg of particles are obtained after sieving and 0.25 kg of powder is recovered.

### Comparative Example 4

Comparative Example 4 provides a method for granulating a lithium battery electrolyte, which includes the following steps:
putting 2 kg of powdery lead acetate into an extrusion granulator from a hopper, the granulation pore size being 0.2 mm, and the pressure being 400 Bar; obtaining particles by extrusion; using a filtering sieve for vibration sieving; transporting electrolytes with a particle size larger than a sieve pore size into a stirring drum through a conveyor belt for stirring and mixing again, and extrusion-granulating the particles, whereby 1.5 kg of particles are obtained after sieving and 0.5 kg of powder is recovered.

### Comparative Example 5

Comparative Example 5 provides a method for granulating a lithium battery electrolyte, which includes the following steps:
putting 2 kg of powdery sodium bistrifluoromethylsulfonylimide into an extrusion granulator from a hopper, the granulation pore size being 1 mm, and the pressure being 150 Bar; obtaining particles by extrusion; using a filtering sieve for vibration sieving; transporting electrolytes with a particle size larger than a sieve pore size into a stirring drum through a conveyor belt for stirring and mixing again, and extrusion-granulating the particles, whereby 1.8 kg of particles are obtained after sieving and 0.2 kg of powder is recovered.

### Comparative Example 6

Comparative Example 6 provides a method for granulating a lithium battery electrolyte, which includes the following steps:
putting 2 kg of powdery potassium bisfluorosulfonylimide into an extrusion granulator from a hopper, the granulation pore size being 1 mm, and the pressure being 200 Bar; obtaining particles by extrusion; using a filtering sieve for vibration sieving; transporting electrolytes with a particle size larger than a sieve pore size into a stirring drum through a conveyor belt for stirring and mixing again, and extrusion-granulating the particles, whereby 1.65 kg of particles are obtained after sieving and 0.35 kg of powder is recovered.

### Performance evaluation

1. stability: the material is placed at room temperature and observed for 6 months to see if it adheres.
2. granularity/mesh size: the material is sieved and tested by a standard test sieve.
3. particle hardness: the material is tested by YK-3A automatic particle strength tester.

**Table 1**

| | stability | granularity/ mesh size/mesh | particle hardness / N |
|---|---|---|---|
| Example 1 | not adhere | 17±0.2 | 20 |
| Example 2 | not adhere | 10±0.3 | 18 |
| Example 3 | not adhere | 32±0.5 | 19 |
| Example 4 | not adhere | 17±0.3 | 17 |
| Example 5 | not adhere | 17±0.2 | 18 |
| Example 6 | not adhere | 17±0.3 | 18 |
| Comparativ e Example 1 | adhere | 78±5 | 30 |
| Comparativ e Example 2 | adhere | 4±0.3 | 4 |
| Comparativ e Example 3 | not adhere | 17±0.8 | 17 |
| Comparativ e Example 4 | not adhere | 77±4 | 25 |
| Comparativ e Example 5 | not adhere | 17±1 | 16 |
| Comparativ e Example 6 | not adhere | 17±1 | 15 |

## Claims

1. A method for granulating a lithium battery electrolyte, comprising the following steps:
step 1: putting an electrolyte into an extrusion granulator from a hopper to obtain particles by extrusion;
step 2: using a filtering sieve for vibration sieving to sieve out electrolytes with a particle size larger than a sieve pore size; and
step 3: transporting the sieved-out electrolytes into a stirring drum through a conveyor belt for stirring and mixing again, extrusion-granulating the particles, followed by packaging and storing in a warehouse.

2. The method for granulating according to claim 1, wherein the electrolyte is in powdery form or crystalline form.

3. The method for granulating according to claim 2, wherein the electrolyte is an electrolyte salt, and is selected from an organic electrolyte salt and/or an inorganic electrolyte salt.

4. The method for granulating according to claim 3, wherein the electrolyte salt is selected from one or more of an electrolyte sodium salt, an electrolyte potassium salt, an electrolyte lithium salt, and an electrolyte calcium salt.

5. The method for granulating according to claim 4, wherein the electrolyte salt is selected from one or more of borate salt, phosphate salt, and imine salt.

6. The method for granulating according to claim 5, wherein the electrolyte salt is selected from one or more of tetrafluoroborate, difluorophosphate, difluorobis(oxalato) phosphate, tetrafluoro(oxalato) phosphate, difluoro(oxalato) borate, bis(oxalato) borate, bisfluorosulfonylimide salt, bistrifluoromethylsulfonylimide salt, and hexafluorophosphate.

7. The method for granulating according to claim 6, wherein the electrolyte is selected from one or more of lithium tetrafluoroborate, lithium difluorophosphate, lithium difluorobis(oxalato) phosphate, lithium tetrafluoro(oxalato) phosphate, lithium difluoro(oxalato) borate, lithium bis(oxalato) borate, lithium bisfluorosulfonylimide salt, lithium bistrifluoromethylsulfonylimide salt, and lithium hexafluorophosphate.

8. The method for granulating according to claim 1, wherein a granulation pore size of the extrusion granulator is 0.5-5 mm, and the pressure is 50-300 Bar.

9. A lithium battery electrolyte material, which is obtained according to the method for granulating according to any one of claims 1 to 8.

10. An application of the lithium battery electrolyte material according to claim 9 in a lithium battery.
